# EUROPEAN PATENT SPECIFICATION

(11) **EP 3 225 520 B1**
(45) Date of publication and mention of the grant of the patent: **11.07.2018**
(21) Application number: 17161847.3
(22) Date of filing: 20.03.2017
(51) Int. Cl.: B62J 6/02, B62J 6/00, B62J 17/02, B60Q 1/00, B60Q 1/26, B60Q 1/28, F21S 43/14, F21S 43/237, F21S 43/245, F21S 43/249, F21S 43/20

(54) **STRADDLED VEHICLE**
GRÄTSCHSITZFAHRZEUG
VÉHICULE À ENFOURCHER

(30) Priority: 31.03.2016 JP 2016072379
(43) Date of publication of application: 04.10.2017
(73) Proprietor: Yamaha Hatsudoki Kabushiki Kaisha, Iwata-shi, Shizuoka-ken 438-8501 (JP)
(72) Inventor: MURAMATSU, Kenichi, Shizuoka-ken, 438-8501 (JP)
(74) Representative: Zimmermann, Tankred Klaus

(56) References cited:
- EP-A1- 1 974 997
- EP-A1- 2 399 809
- JP-A- 2010 076 566
- JP-A- 2010 165 583
- JP-A- 2011 076 958

## Description

The present invention relates to a straddled vehicle.

EP 1974997 A1 discloses a straddled vehicle according to the preamble of claim 1.

EP 2960144 A1 discloses a scooter type motorcycle which is an example of a straddled vehicle. FIG. 13 is a front view of the motorcycle described in EP 2960144 A1. With the motorcycle, a laterally long position lamp 101 is disposed at a front cover 103 so as to be positioned at a vehicle center, and a pair of front flashers 102 are disposed at a right side portion and a left side portion of the front cover 103, respectively.

With straddled vehicles, there are cases where it is desired to strengthen an ornamental impression of a position lamp.

With the motorcycle of EP 2960144 A1, a right end and a left end of the position lamp 101 are disposed close to the pair of front flashers 102 because the position lamp 101 is long in a width direction. When the position lamp 101 and the front flashers 102 are thus close in the width direction, a plurality of light emitting portions are disposed closely and thus the ornamental impression of the position lamp 101 cannot be strengthened sufficiently.

If the motorcycle of EP 2960144 A1 is modified so that the front flashers 102 are distanced from the position lamp 101 in the width direction, although the ornamental impression of the position lamp can be strengthened, there is a limit to performing this without increasing a width of the entire vehicle. Especially with a straddled vehicle, a dimension in a width direction is small in comparison to a dimension in an up-down direction and thus layout restrictions in the width direction are severe in comparison to those in the up-down direction. On the other hand, if in order to distance the front flashers 102 from the position lamp 101 in the width direction, a width of the position lamp 101 is decreased without changing a height (length in the up-down direction) of the position lamp 101, a light emitting area of the position lamp 101 is decreased.

If the position lamp is made vertically long, decrease of the light emitting area can be suppressed. Also, in comparison to the laterally long case, intervals between the front flashers and the position lamp in the width direction are widened to enable the ornamental impression of the position lamp to be strengthened. However, if the position lamp is simply made vertically long, a width of an illumination range, illuminated by the position lamp, tends to be narrowed in comparison to the laterally long case.

An object of the present invention is to provide a straddled vehicle with which an ornamental impression of a position lamp can be strengthened further while suppressing reduction of width of an illumination range illuminated by the position lamp. The present object is achieved by a straddled vehicle according to Claim 1. Preferred embodiments are laid down in the dependent claims.

A preferred embodiment of the present invention provides a straddled vehicle including a head pipe, disposed at a vehicle center in a width direction, a steering apparatus pivotably supported by the head pipe, a front cover, disposed in front of the head pipe, a headlamp, disposed at an upper portion of the steering apparatus, a pair of front flashers including a right front flasher disposed at a right side of the vehicle center and a left front flasher disposed at a left side of the vehicle center, and a position lamp, disposed at the front cover, positioned lower than the headlamp, including an LED lamp that includes an LED (light emitting diode) light source and including a clear cover that transmits light of the LED lamp forward, and where the clear cover includes an exposed portion exposed from a lamp hole that opens at a front surface of the front cover, the exposed portion is formed so that a length of the exposed portion in an up-down direction is greater than a width of the exposed portion, extends in the up-down direction at the vehicle center, and projects forward from the lamp hole, and the exposed portion includes an inner surface provided with a plurality of projections that extend in the up-down direction while projecting rearward and transmit the light of the LED lamp forward.

With the present arrangement, the exposed portion of the position lamp that is exposed from the front cover has a vertically long shape, with the length in the up-down direction being greater than the width in a vehicle front view (a front view of the straddled vehicle), and is disposed at the vehicle center in the vehicle front view. Due to the position lamp being large in height (length in the up-down direction), a light emitting area of the position lamp can be secured readily even if the width of the position lamp is narrow. Also, in comparison to a case where the exposed portion is laterally long, intervals between the front flashers and the position lamp in the width direction are widened. An ornamental impression of the position lamp can thus be strengthened.

However, when an exposed portion of a position lamp is arranged to be vertically long, a width of an illumination range illuminated by the position lamp tends to be narrow in comparison to a laterally long case. The present inventor thus considered securing the width of the illumination range even in a vertically long position lamp. The present inventor noticed that a characteristic of an LED lamp can be used advantageously. An LED lamp is low in heat generation amount and thus a distance between a clear cover and the LED lamp can be made shorter in comparison to a case of a lamp that includes an incandescent bulb as a light source. The present inventor thus arrived at making the exposed portion of the position lamp project forward from the lamp hole of the front cover and forming the plurality of projections, which extend in the up-down direction while projecting rearward, at the inner surface of the exposed portion. The LED lamp has the characteristic of being low in heat generation amount and can thus be disposed close to the clear cover. Even if the exposed portion of the position lamp is projected, by disposing the LED lamp close to the clear cover, the light of the LED lamp can be made to enter the exposed portion while maintaining an intensity of the light. In other words, the light of the LED lamp can be made to enter the exposed portion while suppressing an attenuation amount of the light. The light made to enter the exposed position can be refracted and diffused in the width direction by the plurality of projections extending in the up-down direction. The width of the illumination range illuminated by the position lamp can thus be secured.

The ornamental impression of the position lamp can thus be strengthened further while suppressing reduction of the width of the illumination range.

In the present preferred embodiment, at least one of the following features may be added to the above straddled vehicle.

The LED lamp further includes a light guide member that emits the light of the LED light source forward while guiding the light of the LED light source in the up-down direction. The clear cover transmits forward the light of the LED light source guided by the light guide member. The light guide member includes an entrance surface, facing the LED light source in the up-down direction, a solid interior, by which the light of the LED light source that entered from the entrance surface is guided in the up-down direction, a reflecting surface, reflecting the internally propagating light forward, and a light emitting surface, emitting forward the light reflected at the reflecting surface.

With the present arrangement, the light of the LED light source enters the entrance surface of the light guide member facing the LED light source. The light that enters the entrance surface of the light guide member is reflected forward at the reflecting surface of the light guide member while propagating through an interior of the light guide member. The light reflected at the reflecting surface of the light guide member is emitted forward from the light emitting surface of the light guide member. The light of the LED light source is thus emitted forward from the light guide member while being guided in the up-down direction by the light guide member. The light emitting surface of the light guide member is larger than the light emitting surface of the LED light source. Thus, a wide range can be illuminated with a small number of light sources.

The light guide member is longer in the up-down direction than the lamp hole.

With the present arrangement, the light guide member is longer in the up-down direction than the lamp hole and thus light can be diffused across a wide range from an upper end of the lamp hole to a lower end of the lamp hole. The illumination range can thereby be widened in the up-down direction.

The light guide member includes an outer portion disposed outside the front cover through the lamp hole.

With the present arrangement, a portion of the light guide member is disposed outside the front cover through the lamp hole. The outer portion of the light guide member that is disposed outside the front cover emits the light of the LED light source forward. The outer portion is disposed outside the front cover and thus the light emitted forward from the outer portion is not blocked by the front cover. The illumination range can thus be widened in the up-down direction and the width direction.

The exposed portion of the position lamp includes a narrow portion that has the smallest width in the exposed portion in a front view of the straddled vehicle and a wide portion that has the greatest width in the exposed portion in the front view of the straddled vehicle and that is disposed higher than the narrow portion.

The width of the illumination range varies in accordance with a width of the exposed portion. With the present arrangement, the wide portion of greatest width in the vehicle front view is disposed higher than the narrow portion of smallest width in the vehicle front view. In this case, the width of the illumination range widens stepwise or continuously as the illumination range approaches the eyes of a person from the feet of the person. The width of the illumination range is thus made wide at a position close to the eyes of a person in front of the straddled vehicle and thus the ornamental impression of the position lamp can be strengthened further.

The entire position lamp is disposed at a height differing from those of the headlamp and the pair of front flashers.

With the present arrangement, the entirety of the position lamp is disposed not just at a height differing from that of the headlamp but is also disposed at a height differing from that of the pair of front flashers. Thus, in comparison to a case where a portion of the position lamp is disposed at the same height as another lamp, the ornamental impression of the position lamp can be strengthened further.

The front surface of the front cover and an outer surface of the exposed portion define a recess of V-shaped cross section at an edge of the lamp hole.

With the present arrangement, the front surface of the front cover and the outer surface of the exposed portion define the recess of V-shaped cross section at the edge of the lamp hole. When there is no recess, it is difficult to make the light, passing through the outer surface of the exposed portion, be refracted at a large angle in a vicinity of the edge of the lamp hole. On the other hand, if there is a recess, the light passing through the outer surface of the exposed portion can be refracted at a large angle in the vicinity of the edge of the lamp hole. The illumination range can thereby be widened.

The recess surrounds an entire circumference of the exposed portion.

With the present arrangement, the recess defined by the front surface of the front cover and the outer surface of the exposed portion surrounds the entire periphery of the exposed portion. Thus, the light passing through the outer surface of the exposed portion can be refracted outward in the width direction at a large angle at the vicinity of the edge of the lamp hole. Further, the light passing through the outer surface of the exposed portion can be refracted in an up direction or a down direction at a large angle at the vicinity of the edge of the lamp hole. The illumination range can thereby be widened in both the width direction and the up-down direction.

The straddled vehicle further includes a first handle cover, disposed in front of a steering handle of the steering apparatus, and a second handle cover, disposed behind the steering handle and connected to the first handle cover. An upper end of the exposed portion of the position lamp is positioned higher than a lower end of the second handle cover.

With the present arrangement, the upper end of the exposed portion of the position lamp is positioned higher than the lower end of the second handle cover and the exposed portion of the position lamp can thereby be made sufficiently long in the up direction. The illumination range can thereby be widened in the up direction.

The straddled vehicle further includes a seat including a seating surface on which a rider sits. The lower end of the exposed portion of the position lamp is positioned lower than a seat surface of the seat.

With the present arrangement, the lower end of the exposed portion of the position lamp is positioned lower than the seat surface of the seat and the exposed portion of the position lamp can thereby be made sufficiently long in the down direction. The illumination range can thereby be widened in the down direction.

The exposed portion of the position lamp has a curved shape in a side view of the straddled vehicle.

With the present arrangement, the exposed portion of the position lamp has the curved shape in the vehicle side view (the side view of the straddled vehicle) and thus an area of the exposed portion can be increased in comparison to a case where the exposed portion has a rectilinear shape in the vehicle side view. An area of the light emitting surface of the position lamp from which the light of the LED light source is emitted can thus be increased. The illumination range can thereby be widened.

A width of the exposed portion of the position lamp is narrower than a width of a front wheel of the straddled vehicle in a front view of the straddled vehicle.

With the present arrangement, the width of the exposed portion of the position lamp is narrowed so that the width of the exposed portion is narrower than the width of the front wheel of the straddled vehicle and thus the position lamp is distanced further from the front flashers in the width direction. The ornamental impression of the position lamp can thereby be strengthened further.

The width of the exposed portion of the position lamp is narrower than a width of the head pipe in a front view of the straddled vehicle.

With the present arrangement, the width of the exposed portion of the position lamp is narrowed so that the width of the exposed portion is narrower than the width of the head pipe and thus the position lamp is distanced further from the front flashers in the width direction. The ornamental impression of the position lamp can thereby be strengthened further.

A distance between the LED lamp and the clear cover is smaller than the width of the exposed portion.

With the present arrangement, the distance between the LED lamp and the clear cover is smaller than the width of the exposed portion and thus the LED lamp can be made sufficiently close to the exposed portion. The light of the LED lamp can thereby be made to enter the exposed portion while maintaining the intensity of the light sufficiently.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a schematic left side view of a straddled vehicle according to a preferred embodiment.
FIG. 2A and FIG. 2B are diagrams of a portion of a front surface of the straddled vehicle.
FIG. 3A and FIG. 3B are diagrams of a portion of an upper surface of the straddled vehicle.
FIG. 4A and FIG. 4B are diagrams of a portion of a left side surface of the straddled vehicle.
FIG. 5 is a transverse sectional view of a position lamp taken along line V-V shown in FIG. 6.
FIG. 6 is a vertical sectional view of the position lamp taken along line VI-VI shown in FIG. 5.
FIG. 7 is a conceptual diagram for describing how light spreads in a case where a position lamp projects from a lamp hole of a front cover.
FIG. 8 is a conceptual diagram for describing how light spreads in a case where a position lamp does not project from a lamp hole of a front cover.
FIG. 9 is a sectional view of a position lamp showing a vertical section of the position lamp that includes an incandescent bulb as a light source.
FIG. 10 is a sectional view of the position lamp showing a vertical section of an LED lamp that is not provided with a light guide member.
FIG. 11 is a schematic partial front view of the straddled vehicle with which front flashers are disposed at a handle cover.
FIG. 12 is a schematic partial front view of the straddled vehicle with which at least portions of the front flashers is disposed at a height equal to that of the position lamp.

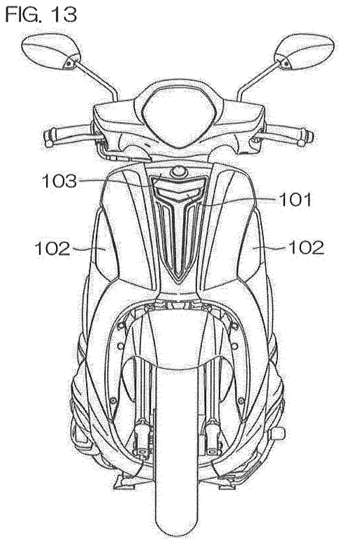

FIG. 13 is a front view of a conventional straddled vehicle.

### DETAILED DESCRIPTION OF THE PREFERRED EMBODIMENTS

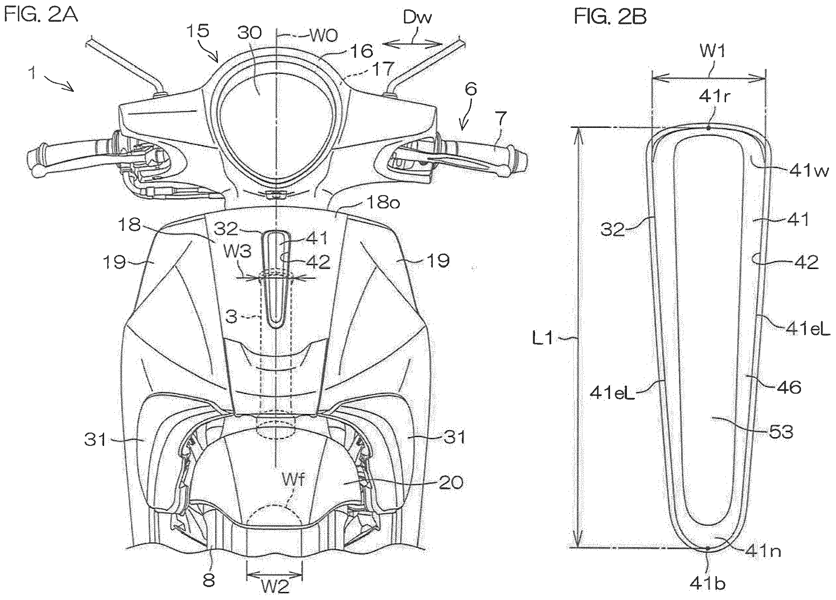

Front-rear, up-down, and left-right directions are defined on the basis of a viewpoint of a forward-facing rider who sits on a straddled vehicle 1 in a reference posture in which the straddled vehicle 1 travels straight ahead on a horizontal plane (in which a steering handle 7 is disposed at a straight-traveling position). The left-right direction corresponds to a vehicle width direction Dw. A vehicle center WO (refer to FIG. 2A) corresponds to a vertical plane that passes through a center line of a head pipe 3 and that is perpendicular to a rotational center of a rear wheel Wr. The straddled vehicle 1 in the reference posture will be hereinafter described unless specific notice is given. A front view, a side view, and a plan view mean a front view, a side view, and a plan view of the straddled vehicle 1, respectively unless specific notice is given.

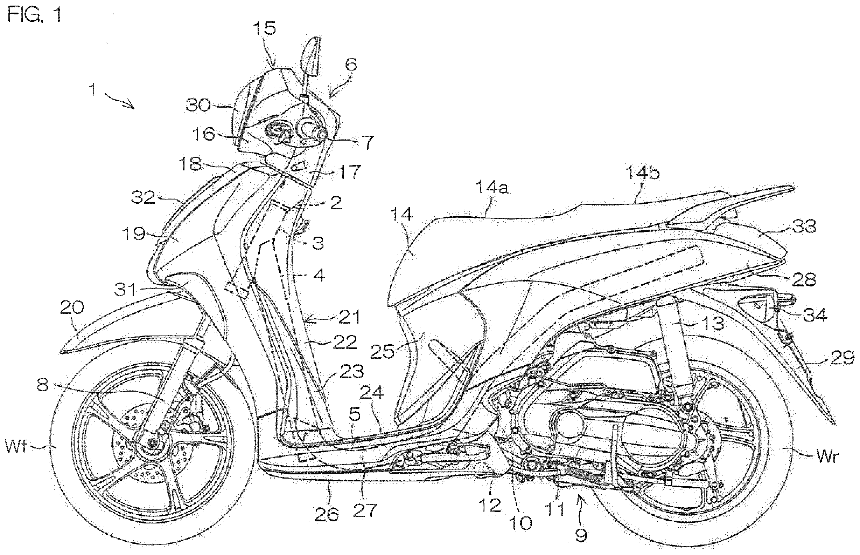

FIG. 1 is a schematic left side view of the straddled vehicle 1 according to a preferred embodiment.

The straddled vehicle 1 includes a frame 2 covered with an exterior cover 15. In FIG.1, the frame 2 is shown by the thick dashed line. The frame 2 includes the head pipe 3 that extends rearward and upwardly, a main frame 4 that extends rearward and downwardly from the head pipe 3, and a left-and-right pair of seat frames 5 that extend rearward from the main frame 4. The pair of the seat frames 5 are disposed on the right side and on the left side of the vehicle center WO, respectively. The pair of the seat frames 5 are opposed to each other in the left-right direction.

The straddled vehicle 1 includes a steering apparatus 6, pivotably supported by the head pipe 3, and a front wheel Wf, rotatably supported by the steering apparatus 6. The steering apparatus 6 includes a steering handle 7, steered by the rider, and a front wheel supporting member 8, rotatably supporting the front wheel Wf. The steering handle 7 is disposed at an upper portion of the steering apparatus 6. The steering handle 7 and the front wheel supporting member 8 are pivotable with respect to the frame 2 around a steering axis corresponding to a central line of the head pipe 3. When the steering handle 7 is steered, the front wheel Wf is pivoted to the right and left together with the steering handle 7. The straddled vehicle 1 is thereby steered.

The straddled vehicle 1 includes a swing unit 9, which generates a motive power that makes the straddled vehicle 1 travel, and a rear wheel Wr, rotatably supported by the swing unit 9. The swing unit 9 includes a power source 10 (an internal combustion engine or an electric motor) and a driving mechanism 11 transmitting the motive power of the power source 10 to the rear wheel Wr. The swing unit 9 is mounted to the frame 2 via a pivot shaft 12 extending in the width direction Dw. The rear wheel Wr is rotatably supported by a rear end portion of the swing unit 9. The rear wheel Wr and the swing unit 9 are swingable in the up-down direction around the pivot shaft 12 with respect to the frame 2. An upper end portion of a rear suspension 13 is mounted to the frame 2 and a lower end portion of the rear suspension 13 is mounted to a rear end portion of the swing unit 9.

The straddled vehicle 1 includes a straddle seat 14 disposed above the pair of seat frames 5. The seat 14 is disposed behind the head pipe 3. The seat 14 is supported by the pair of seat frames 5. The seat 14 may be supported directly by the frame 2 or may be supported indirectly by the frame 2. Also, the seat 14 may be for one person or for two persons. FIG. 1 shows an example where the seat 14 is provided with a main seat on which the rider sits and a tandem seat on which a passenger sits. A seat surface 14a for the rider is disposed further to the front than a seat surface 14b for the passenger.

The exterior cover 15 includes a handle cover (first handle cover) 16, disposed in front of the steering handle 7, and a rear handle cover (second handle cover) 17, disposed behind the steering handle 7. The exterior cover 15 includes a front cover 18, disposed in front of the head pipe 3, a pair of right and left front side covers 19, respectively disposed at a right side and a left side of the front cover 18, and a front fender 20, disposed above the front wheel Wf.

The handle cover 16 and the rear handle cover 17 are connected to each other. The handle cover 16 and the rear handle cover 17 are mounted to the steering handle 7. The front cover 18 and the front side covers 19 are mounted to the frame 2. The front fender 20 is mounted to the front wheel supporting member 8. When the steering handle 7 is steered, the handle cover 16, the rear handle cover 17, and the front fender 20 pivot together with the steering handle 7.

The exterior cover 15 includes an inner panel 21 disposed behind the front cover 18 and the front side covers 19. The inner panel 21 includes an upper panel 22, disposed behind the head pipe 3, and a lower panel 23, disposed below the upper panel 22. The exterior cover 15 includes footboard 24, disposed above the pair of seat frames 5, and an under panel 25, extending from a rear end portion of the footboard 24 to a front end portion of the seat 14. The exterior cover 15 defines a foot space, in which the feet and legs of the rider are disposed, between the inner panel 21 and the under panel 25 in the front-rear direction. The feet of the rider are placed on a footrest portion provided on an upper surface of the footboard 24.

The exterior cover 15 include an under cover 26, disposed below the footboard 24 and the pair of seat frames 5, and a pair of right and left under side covers 27, respectively disposed at a right side and a left side of the footboard 24 and the under cover 26. The exterior cover 15 includes a pair of right and left rear covers 28, extending from rear end portions of the pair of under side covers 27 to side portions of the seat 14, and a rear fender 29, disposed above and behind the rear wheel Wr. The rear covers 28 are respectively disposed at a right side and a left side of the pair of seat frames 5. The rear covers 28 are disposed below the seat 14 in side view. A front end portion of the rear fender 29 is disposed between the pair of rear covers 28. The rear fender 29 extends rearward and downward from the rear cover 28 in side view.

The straddled vehicle 1 includes a headlamp 30 that emits light forward, two front flashers 31 that flash in accordance with an operation of the rider, and a position lamp 32 that emits light forward. The headlamp 30, the front flashers 31, and the position lamp 32 are disposed further to the front than a front end of the seat 14. The headlamp 30 is disposed at the handle cover 16. The two front flashers 31 include a right front flasher 31 disposed at the right side of the vehicle center WO and a left front flasher 31 disposed at the left side of the vehicle center WO. The two front flashers 31 are disposed at the two front side covers 19, respectively. The position lamp 32 is disposed at the front cover 18.

The straddled vehicle 1 includes a tail lamp 33 that emits light rearward and two rear flashers 34 that flash in accordance with an operation of the rider. The tail lamp 33 and the rear flashers 34 are disposed further to the rear than a front end of the rear wheel Wr. The tail lamp 33 is disposed between rear end portions of the two rear covers 28. The tail lamp 33 is disposed behind the seat 14 in side view. The rear flashers 34 are disposed below the tail lamp 33 in side view. The two rear flashers 34 include a right rear flasher 34 disposed at the right side of the vehicle center WO and a left rear flasher 34 disposed at the left side of the vehicle center WO. The two rear flashers 34 are mounted to the rear fender 29.

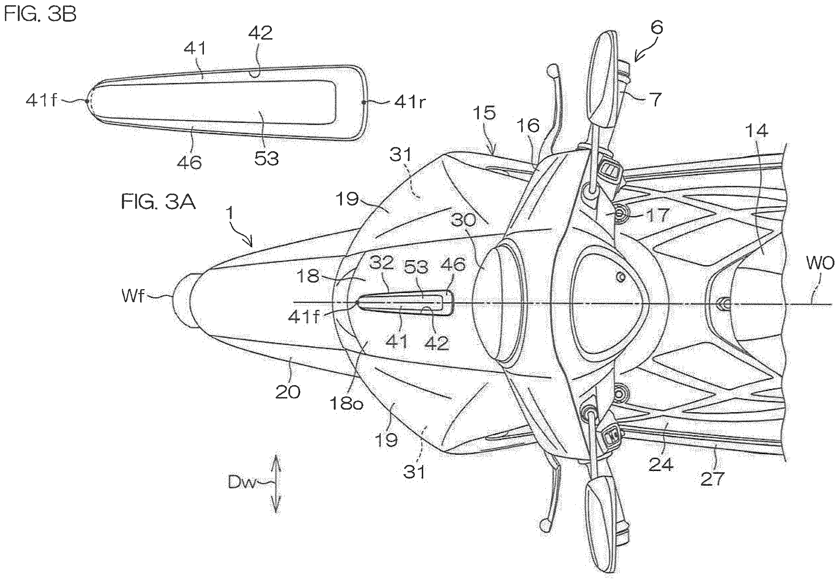

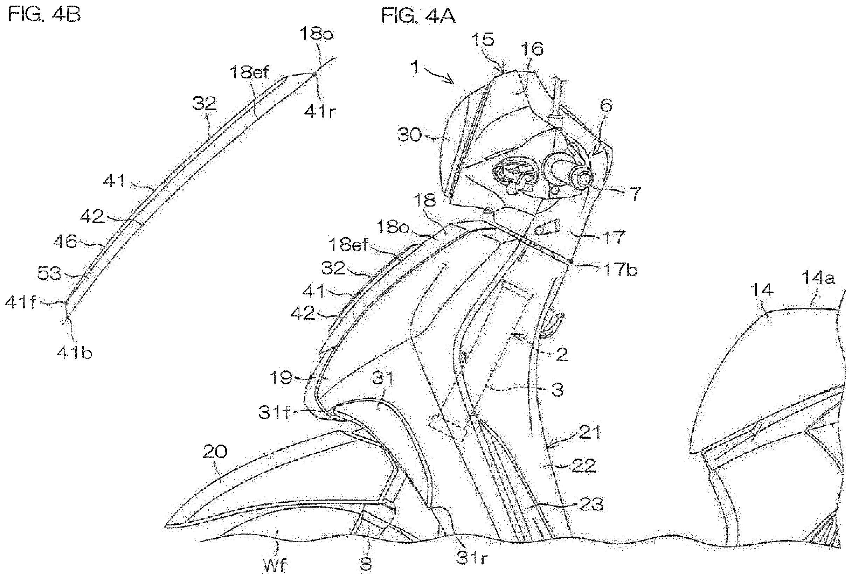

FIG. 2A and FIG. 2B are diagrams of a portion of a front surface of the straddled vehicle 1. FIG. 3A and FIG. 3B are diagrams of a portion of an upper surface of the straddled vehicle 1. FIG. 4A and FIG. 4B are diagrams of a portion of a left side surface of the straddled vehicle 1.

FIG. 2A shows a portion of the front surface of the straddled vehicle 1 and FIG. 2B shows the position lamp 32, shown in FIG. 2A, in enlarged manner. FIG. 3A shows a portion of the upper surface of the straddled vehicle 1 and FIG. 3B shows the position lamp 32, shown in FIG. 3A, in enlarged manner. FIG. 4A shows a portion of the left side surface of the straddled vehicle 1 and FIG. 4B shows the position lamp 32, shown in FIG. 4A, in enlarged manner.

As shown in FIG. 2A, the headlamp 30, the front flashers 31, and the position lamp 32 include exposed portions exposed from the exterior cover 15. Each of the exposed portions of the headlamp 30, the front flashers 31, and the position lamp 32 is a portion of a clear cover that transmits light of a light source.

In the following description, the exposed portion of the headlamp 30 shall be referred to simply as the headlamp 30 and the exposed portion of each front flasher 31 shall be referred to as the front flasher 31. The exposed portion of the position lamp 32 shall be referred to simply as the exposed portion 41. The exposed portion 41 is exposed from a lamp hole 42 of the front cover 18. The exposed portion 41 is visible from the outside of the exterior cover 15. The exposed portion 41 projects from the lamp hole 42 of the front cover 18 to the outside the front cover 18. The lamp hole 42 opens at a front surface 18o of the front cover 18 that corresponds to an outer surface of the front cover 18.

As shown in FIG. 2A and FIG. 2B, the exposed portion 41 is disposed at the vehicle center WO. The exposed portion 41 has a vertically long shape that is long in the up-down direction. The exposed portion 41 is symmetrical or substantially symmetrical with respect to the vehicle center WO. The exposed portion 41 is disposed between the headlamp 30 and the front fender 20. The exposed portion 41 is disposed at a height between the headlamp 30 and the front flashers 31. The exposed portion 41 is not overlapped with the headlamp 30 and the front flashers 31 with respect to a height direction corresponding to the up-down direction. A lower end 41b of the exposed portion 41 is disposed higher than the front flashers 31. The exposed portion 41 is disposed further inward in the width direction Dw than the front flashers 31. The exposed portion 41 is disposed further inward in the width direction Dw than a right end and a left end of the headlamp 30.

A width W1 of the exposed portion 41 is shorter than a length L1 of the exposed portion 41 in the up-down direction. The width W1 of the exposed portion 41 decreases as the lower end 41b of the exposed portion 41 is approached. The width W1 of the exposed portion 41 is shorter than each of a width of the headlamp 30 and a width of the front flasher 31. An area of the exposed portion 41 is smaller than each of an area of the headlamp 30 and an area of the front flasher 31. The length L1 of the exposed portion 41 in the up-down direction is longer than a distance in the up-down direction from an upper end (rear end 41r) of the exposed portion 41 to a lower end of the headlamp 30. The width W1 of the exposed portion 41 is narrower than a width W2 of the front wheel Wf. The width W1 of the exposed portion 41 is narrower than a maximum value W3 of a width of the head pipe 3.

As shown in FIG. 2B, each side edge 41eL of the exposed portion 41 is obliquely inclined with respect to the vehicle center WO so as to approach the vehicle center WO as a lower end of the side edge 41eL is approached. An interval between the pair of side edges 41eL in the width direction Dw decreases as the lower ends of the side edges 41eL are approached. The width W1 of the exposed portion 41 signifies the interval between the pair of side edges 41eL in the width direction Dw. A wide portion 41w of greatest width in front view is provided at the upper end of the exposed portion 41. A narrow portion 41n of smallest width in front view is provided at the lower end 41b of the exposed portion 41. The wide portion 41w is disposed above the narrow portion 41n.

As shown in FIG. 3A and FIG. 3B, the exposed portion 41 is disposed in front of the headlamp 30 in plan view. A length of the exposed portion 41 in the front-rear direction in plan view is longer than a length of the headlamp 30 in the front-rear direction in plan view. The exposed portion 41 is disposed between the pair of front flashers 31 in plan view. The front flashers 31 are hidden by the front cover 18. A front end 41f of the exposed portion 41 is separated to the rear from a front edge of the front cover 18 in plan view. As shown in FIG. 3B, the front end 41f of the exposed portion 41 is disposed in front of a front end of the lamp hole 42 in plan view. The front end of the lamp hole 42 is hidden by the exposed portion 41 in plan view.

As shown in FIG. 4A and FIG. 4B, the exposed portion 41 extends rearward and upward along a front edge 18ef of the front cover 18 in side view. The exposed portion 41 has a curved shape that is obliquely upwardly convex in side view. The front end edge 18ef of the front cover 18 also has a curved shape that is obliquely upwardly convex in side view. The front edge 18ef of the front cover 18 is curved at the same or substantially the same curvature as an intermediate portion of a front edge of the exposed portion 41 in side view. The exposed portion 41 projects forward from the front edge 18ef of the front cover 18. An amount of projection of the exposed portion 41 in a direction perpendicular to the front edge 18ef of the front cover 18 is fixed or substantially fixed with the exception of an upper end portion and a lower end portion of the exposed portion 41.

The rear end 41r of the exposed portion 41 is disposed further to the front than a front end of the headlamp 30. The front end of the headlamp 30 is disposed further to the rear than rear ends 31r of the front flashers 31. The exposed portion 41 is disposed above the front flashers 31 in side view. The front end 41f of the exposed portion 41 is disposed further to the front than front ends 31f of the front flashers 31. The rear end 41r of the exposed portion 41 is disposed further to the front than the rear ends 31r of the front flashers 31. The front end 41f of the exposed portion 41 may be disposed further to the rear than the front ends 31f of the front flashers 31 or may be disposed directly above the front ends 31f of the front flashers 31. The same applies to a relationship between the rear end 41r of the exposed portion 41 and the rear ends 31r of the front flashers 31.

The upper end of the exposed portion 41 coincides with the rear end 41r of the exposed portion 41. The upper end of the exposed portion 41 may be a portion different from the rear end 41r of the exposed portion 41. The upper end of the exposed portion 41 is disposed higher than an upper end of the head pipe 3 and is disposed higher than a lower end 17b of the rear handle cover 17. The lower end 17b of the rear handle cover 17 is disposed higher than the rider' s seat surface 14a of the seat 14. The lower end 41b of the exposed portion 41 is disposed lower than the rider's seat surface 14a. The lower end 41b of the exposed portion 41 is a portion different from the front end 41f of the exposed portion 41. The lower end 41b of the exposed portion 41 may coincide with the front end 41f of the exposed portion 41. The lower end 41b of the exposed portion 41 is disposed at a height between the upper end of the head pipe 3 and a lower end of the head pipe 3. The lower end 41b of the exposed portion 41 is disposed further to the rear than an upper end of the front wheel Wf.

The length of the exposed portion 41 in the front-rear direction is longer than the length of the headlamp 30 in the front-rear direction. A length of each front flasher 31 in the front-rear direction is longer than the length of the exposed portion 41 in the front-rear direction. The length of the exposed portion 41 in the front-rear direction may be equal to the length of each front flasher 31 in the front-rear direction or may be shorter than the length of each front flasher 31 in the front-rear direction. Also, the length of the exposed portion 41 in the front-rear direction may be equal to the length L1 of the exposed portion 41 in the up-down direction or may be longer or shorter than the length L1 of the exposed portion 41 in the up-down direction.

Respective portions of the position lamp 32 shall now be described.

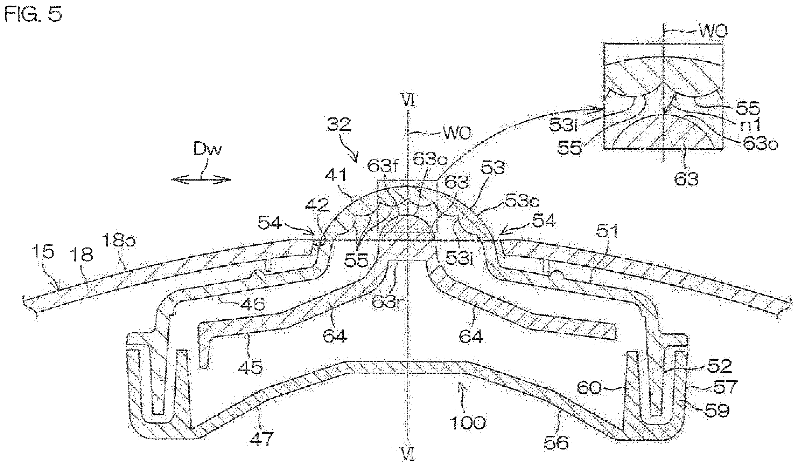

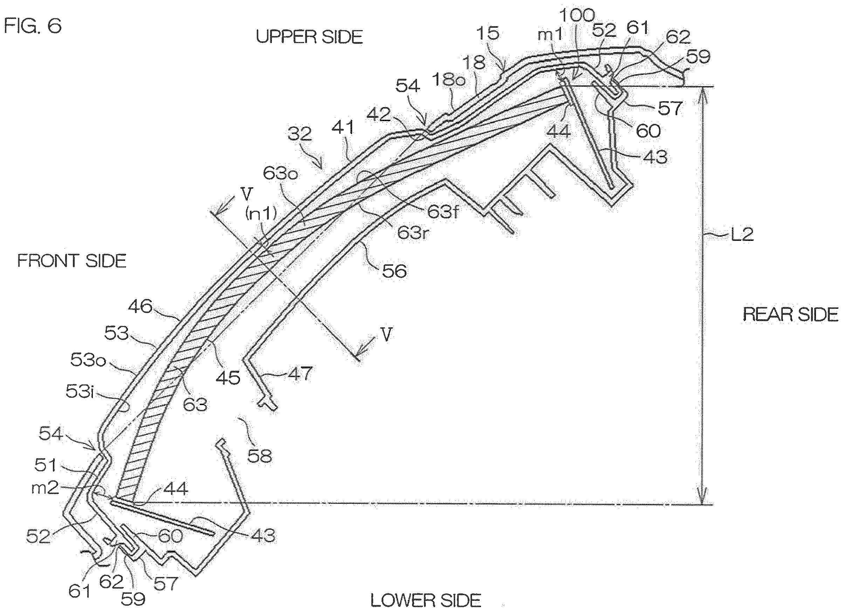

FIG. 5 is a transverse sectional view of the position lamp 32 taken along line V-V shown in FIG. 6. FIG. 6 is a vertical sectional view of the position lamp 32 taken along line VI-VI shown in FIG. 5. The transverse section signifies a section orthogonal to an axial direction of a light guide rod 63.

As shown in FIG. 6, the position lamp 32 includes two LED light sources 44 that emit light, a light guide member 45 that diffuses the light of each LED light source 44, a clear cover 46 that transmits the light of each LED light source 44 guided by the light guide member 45, and a lamp housing 47, which, together with the clear cover 46, defines a housing chamber housing the LED light sources 44 and the light guide member 45.

The clear cover 46 is disposed in front of the lamp housing 47. The clear cover 46 is mounted to the lamp housing 47. The LED light sources 44 and the light guide member 45 are disposed in the housing chamber between the clear cover 46 and the lamp housing 47. One LED light source 44 is disposed above the light guide member 45 and the other LED light source 44 is disposed below the light guide member 45. The two LED light sources 44 are respectively adhered to surfaces of two LED substrates 43. Each LED substrate 43 is fixed by a screw to the light guide member 45. The light guide member 45 is fixed by a screw to the lamp housing 47. The lamp housing 47 is assembled to the exterior cover 15. The lamp housing 47 is fixed to the frame 2 (see FIG. 1) via the exterior cover 15 and a stay. The position lamp 32 is thereby fixed to the frame 2.

The clear cover 46 includes a cover front wall portion 51, disposed in front of the light guide member 45, a cylindrical cover peripheral wall portion 52, extending toward the lamp housing 47 from an outer peripheral portion of the cover front wall portion 51, and a cover projection portion 53, projecting forward from the cover front wall portion 51. The cover projection portion 53 is shorter in the up-down direction than the cover front wall portion 51. The cover projection portion 53 is biased downward with respect to the cover front wall portion 51. The cover projection portion 53 has a vertical section with a forwardly convex curved shape.

As shown in FIG. 5, the cover projection portion 53 of the clear cover 46 is shorter in the width direction Dw than the cover front wall portion 51. The cover projection portion 53 is disposed at a central portion of the cover front wall portion 51 in the width direction Dw. The cover projection portion 53 has a transverse section with a forwardly convex curved shape. The cover projection portion 53 overlaps with the vehicle center WO. The cover projection portion 53 is symmetrical or substantially symmetrical with respect to the vehicle center WO.

The cover projection portion 53 of the clear cover 46 is inserted into the lamp hole 42 from the rear of the lamp hole 42. The cover projection portion 53 projects forward from the lamp hole 42. An amount of projection of the cover projection portion 53 is smaller than a width of the lamp hole 42. A portion of the cover projection portion 53 is disposed outside the front cover 18 through the lamp hole 42. The portion of the cover projection portion 53 disposed outside the lamp hole 42 corresponds to the exposed portion 41 of the position lamp 32.

The front surface 18o of the front cover 18 and an outer surface 53o of the cover projection portion 53 define an annular recess 54 at an edge of the lamp hole 42. That is, the front surface 18o of the front cover 18 and the outer surface 53o of the cover projection portion 53 are not smoothly continuous at the edge of the lamp hole 42 but define a step at the edge of the lamp hole 42. The recess 54 surrounds an entire circumference of the exposed portion 41. A cross section of the recess 54 at each position in a circumferential direction of the recess 54 has a V-shaped configuration that is open forwardly.

The cover projection portion 53 of the clear cover 46 includes a plurality of projections 55 projecting rearward from an inner surface 53i of the cover projection portion 53. FIG. 5 shows an example where six projections 55 are provided. The plurality of projections 55 are aligned in a circumferential direction of the cover projection portion 53. Each projection 55 has a transverse section with a rearwardly convex curved shape. An amount of projection of the projection 55 is smaller than a thickness of the cover projection portion 53. The projection 55 extends in the up-down direction from an upper end portion of the cover projection portion 53 to a lower end portion of the cover projection portion 53 along the inner surface 53i of the cover projection portion 53.

The lamp housing 47 includes a housing rear wall portion 56, disposed behind the light guide member 45, and a cylindrical housing peripheral wall portion 57, extending toward the clear cover 46 from an outer peripheral portion of the housing rear wall portion 56. The lamp housing 47 further includes a plurality of mounting portions (not shown), in which a plurality of screws, fixing the lamp housing 47 to the exterior cover 15 (see FIG. 1), are respectively inserted. Wirings (unillustrated), that supplies electric power to the LED light sources 44, are inserted inside the housing chamber from a penetrating hole 58 (see FIG. 6) penetrating through the housing rear wall portion 56 in its thickness direction.

As shown in FIG. 6, the housing peripheral wall portion 57 of the lamp housing 47 defines an annular fitting groove in which the cover peripheral wall portion 52 of the clear cover 46 is inserted. The housing peripheral wall portion 57 includes an annular outer wall portion 59, disposed at an outer side of the fitting groove, and an annular inner wall portion 60, disposed at an inner side of the fitting groove. A hook portion 61 projecting outward from the cover peripheral wall portion 52 of the clear cover 46 is inserted in a penetrating hole 62 penetrating through the outer wall portion 59 in its thickness direction. Movement of the clear cover 46 with respect to the lamp housing 47 is thereby restricted.

As shown in FIG. 5, the light guide member 45 includes the light guide rod 63, extending in the up-down direction along the vehicle center WO, and two light guide plates 64, extending in the up-down direction while spreading sideways from the light guide rod 63. The light guide member 45 has a rearwardly open V-shaped transverse section. The light guide rod 63 is disposed in front of the two light guide plates 64. A front edge portion of each light guide plate 64 is connected to a rear surface 63r of the light guide rod 63. A width of each light guide plate 64 is wider than a width of the light guide rod 63.

The light guide rod 63 overlaps with the vehicle center WO. The light guide rod 63 is symmetrical or substantially symmetrical with respect to the vehicle center WO. A front surface 63f of the light guide rod 63 has a transverse section of forwardly convex curved shape. The rear surface 63r of the light guide rod 63 has a rectilinear transverse section parallel to the width direction Dw. The light guide rod 63 is disposed inside the cover projection portion 53 of the clear cover 46. Each light guide plate 64 extends from an interior of the cover projection portion 53 to the rear of the cover front wall portion 51. The light guide rod 63 includes an outer portion 63o disposed outside the front cover 18 through the lamp hole 42. The outer portion 63o is positioned in front of virtual rectilinear lines (the rectilinear alternate long and two short dashes lines shown in FIG. 5 and FIG. 6), each joining two positions of the edge of the lamp hole 42.

As shown in FIG. 6, the light guide rod 63 is curved so as to project forward. Although unillustrated, the light guide plates 64 are also curved so as to project forward similarly to the light guide rod 63. A length L2 of the light guide rod 63 in the up-down direction is greater than a length of the lamp hole 42 in the up-down direction. An upper end of the light guide rod 63 is disposed higher than an upper end of the lamp hole 42. A lower end of the light guide rod 63 is disposed lower than a lower end of the lamp hole 42. A distance in the up-down direction from the lower end of the light guide rod 63 to the lower end of the lamp hole 42 is shorter than a distance in the up-down direction from the upper end of the light guide rod 63 to the upper end of the lamp hole 42.

An upper end surface of the light guide rod 63 faces the upper LED light source 44. A lower end surface of the light guide rod 63 faces the lower LED light source 44. Each LED light source 44 is disposed between the light guide rod 63 and the corresponding LED substrate 43. The upper end surface and the lower end surface of the light guide rod 63 are entrance surfaces entered by the light from the LED light sources 44. The rear surface 63r of the light guide rod 63 is a reflecting surface by which light, propagating through an interior of the light guide rod 63, is reflected toward the front surface 63f of the light guide rod 63. The reflecting surface is, for example, an uneven surface in which a plurality of grooves extending in the width direction Dw are aligned in the up-down direction. The front surface 63f of the light guide rod 63 is a light emitting surface by which the light, reflected by the rear surface 63r of the light guide rod 63, is emitted forward.

When the two LED light sources 44 emit light, the light from each LED light source 44 enters into the interior of the light guide rod 63 from the upper end surface or the lower end surface of the light guide rod 63. The light that enters into the interior of the light guide rod 63 propagates through the interior of the light guide rod 63 in the axial direction of the light guide rod 63 while being reflected by the rear surface 63r of the light guide rod 63. The two LED light sources 44 are respectively disposed at an upper side and a lower side of the light guide rod 63 and thus the light from the LED light sources 44 spreads reliably within a range from the upper end of the light guide rod 63 to the lower end of the light guide rod 63. The light propagating through the interior of the light guide rod 63 is emitted forward from the front surface 63f of the light guide rod 63 after being reflected by the rear surface 63r of the light guide rod 63. Respective portions of the front surface 63f of the light guide rod 63 are thereby made to emit light forward.

The position lamp 32 thus includes an LED lamp 100 that includes the LED light sources 44 and the light guide member 45. The LED lamp 100 and the clear cover 46 are disposed comparatively closely. Specifically, a shortest distance m1 (see FIG. 6) between the upper LED light source 44 and the clear cover 46 is smaller than the width W1 of the exposed portion 41. A shortest distance m2 (see FIG. 6) between the lower LED light source 44 and the clear cover 46 is smaller than the width W1 of the exposed portion 41.

A reason why the LED lamp 100 can be disposed close to the clear cover 46 is because the LED light sources 44, which correspond to heat sources, are low in heat generation amount and the LED light sources 44 do not become high in temperature. By it being possible to dispose the respective LED light sources 44 close to the clear cover 46, the light guide member 45 can be disposed close to the inner surface 53i of the cover projection portion 53 without making a curvature of the light guide member 45 large. A shortest distance n1 between the light guide member 45 and the clear cover 46 is smaller than the width W1 of the exposed portion 41. The light guide member 45 emits light close to the cover projection portion 53 because the light guide member 45 is positioned close to the cover projection portion 53. The light passes through the cover projection portion 53 while hardly being attenuated.

The light emitted from the front surface 63f of the light guide rod 63 passes forwardly through the cover projection portion 53 of the clear cover 46 and illuminates a space in front of the straddled vehicle 1. The front surface 63f of the light guide rod 63, which has an arcuate transverse section, refracts the light, passing through the front surface 63f of the light guide rod 63, in the width direction Dw. The light passing through the front surface 63f of the light guide rod 63 thus includes not only light that propagates straightly from the front surface 63f of the light guide rod 63 but also light that propagates obliquely forward from the front surface 63f of the light guide rod 63. An illumination range can thereby be spread in the width direction Dw.

Also, the light passing through the front surface 63f of the light guide rod 63 is refracted in the width direction Dw in a process of passing through the inner surface 53i of the cover projection portion 53 that has an arcuate transverse section. Similarly, the light passing through the inner surface 53i of the cover projection portion 53 is refracted in the width direction Dw in a process of passing through the outer surface 53o of the cover projection portion 53 that has an arcuate transverse section. The illumination range can thus be spread further in the width direction Dw. Moreover, the plurality of projections 55, which increase an angle of refraction of light in the width direction Dw, are provided at the inner surface 53i of the cover projection portion 53 and thus the width of the illumination range can be spread further.

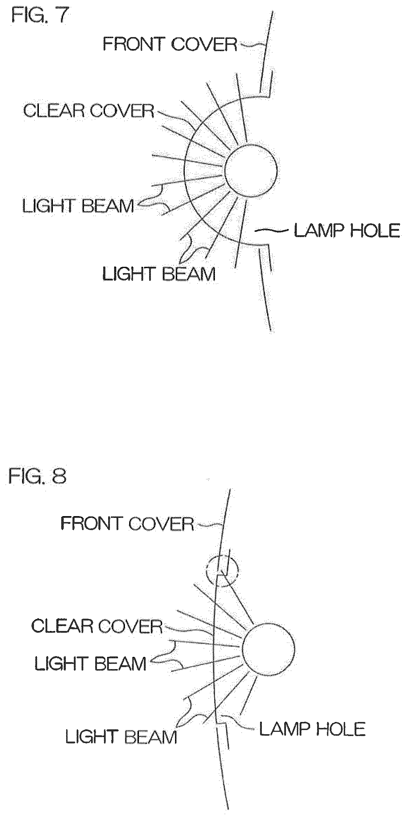

FIG. 7 is a conceptual diagram for describing how light spreads in a case where a position lamp projects from a lamp hole of a front cover. FIG. 8 is a conceptual diagram for describing how light spreads in a case where a position lamp does not project from a lamp hole of a front cover.

As shown in FIG. 8, in the case where the position lamp does not project from the lamp hole of the front cover, a light emitting surface that emits light rays is disposed further to the rear than the lamp hole. In this case, a portion of the light emitted obliquely to the side from the light emitting surface is blocked by the front cover (see the circle of the alternate long and short dash line).

On the other hand, in the case where the position lamp projects from the lamp hole of the front cover as shown in FIG. 7, a light emitting surface can be brought close to the lamp hole and at least a portion of the light emitting surface can be disposed outside the front cover. In this case, light blocked by the front cover can be reduced. An illumination range can thereby be widened in the width direction Dw. By the same reason, the illumination range can also be spread in the up-down direction.

Also, in the case where the position lamp does not project from the lamp hole of the front cover, it is difficult to make light pass through a clear cover be refracted at a large angle in a vicinity of an edge of the lamp hole. On the other hand, in the case where the position lamp projects from the lamp hole of the front cover, light passing through a clear cover can be refracted at a large angle in a vicinity of an edge of the lamp hole. The position lamp projects from the lamp hole at all positions in a circumferential direction of the lamp hole. The illumination range can thus be spread in both the width direction Dw and the up-down direction.

As described above, with the present preferred embodiment, the exposed portion 41 of the position lamp 32 that is exposed from the front cover18 has a vertically long shape, with the length in the up-down direction being greater than the width in front view, and is disposed at the vehicle center WO in front view. Due to the position lamp 32 being large in height (the length L1 in the up-down direction), a light emitting area of the position lamp 32 can be secured readily even if the width W1 of the position lamp 32 is narrow. Also, in comparison to a case where the exposed portion 41 is laterally long, intervals between the front flashers 31 and the position lamp 32 in the width direction Dw are widened. An ornamental impression of the position lamp 32 can thus be strengthened.

However, when an exposed portion of a position lamp is arranged to be vertically long, a width of an illumination range illuminated by the position lamp tends to be narrow in comparison to a laterally long case. The present inventor thus considered securing the width of the illumination range even in a vertically long position lamp. The present inventor noticed that a characteristic of an LED lamp can be used advantageously.

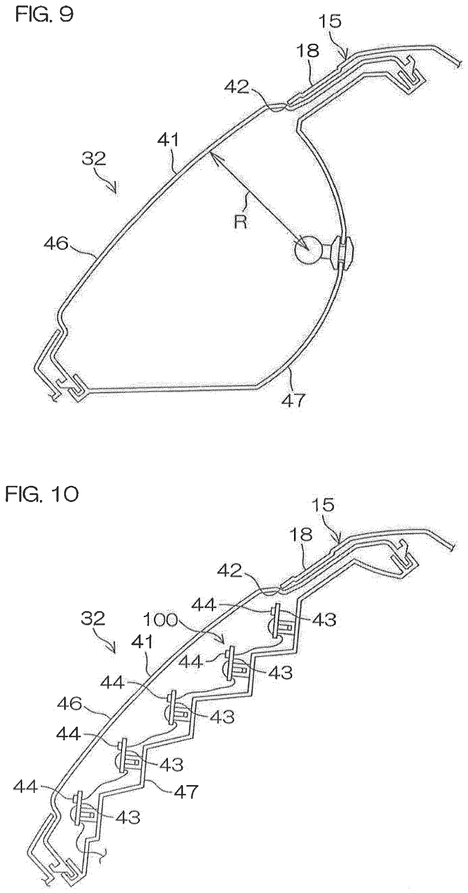

As shown in FIG. 9, with a lamp that includes an incandescent bulb as a light source, a distance R between a clear cover and the incandescent bulb must be set comparatively large because the incandescent bulb becomes high in temperature. On the other hand, with an LED lamp, the distances n1, m1, and m2 between a clear cover and the LED lamp can be made small because the LED lamp has a characteristic of being low in heat generation amount. With the use of the above arrangement as a premise, the present inventor arrived at making the exposed portion 41 of the position lamp 32 project forward from the lamp hole 42 of the front cover 18 and forming the plurality of projections 55, which extend in the up-down direction while projecting rearward, at the inner surface of the exposed portion 41.

The LED lamp 100 has the characteristic of being low in heat generation amount and thus the distance m1 between the LED lamp 100 and the clear cover 46 can be made small. Even if the exposed portion 41 of the position lamp 32 is projected, by disposing the LED lamp 100 close to the clear cover 46, the light of the LED lamp 100 can be made to enter the exposed portion 41 while maintaining an intensity of the light. In other words, the light of the LED lamp 100 can be made to enter the exposed portion 41 while suppressing an attenuation amount of the light. The light made to enter the exposed position 41 can be refracted and diffused in the width direction Dw by the plurality of projections 55 extending in the up-down direction. The width of the illumination range illuminated by the position lamp 32 can thus be secured.

With the present preferred embodiment, the plurality of projections 55 provided at the inner surface of the clear cover 46 transmits the light of each LED light source 44 forward. The light of each LED light source 44 is refracted in the width direction Dw in the process of passing through the projections 55 of the clear cover 46. Further, the projections 55 of the clear cover 46 extend in the up-down direction and thus the light of each LED light source 44 is refracted in the width direction Dw across a wide range in the up-down direction. The width of the illumination range can thereby be secured.

With the present preferred embodiment, the light of each LED light source 44 enters the entrance surface of the light guide member 45 facing the LED light source 44. The light that enters the entrance surface of the light guide member 45 is reflected forward at the reflecting surface of the light guide member 45 while propagating through the interior of the light guide member 45. The light reflected at the reflecting surface of the light guide member 45 is emitted forward from the light emitting surface of the light guide member 45. The light of each LED light source 44 is thus emitted forward from the light guide member 45 while being guided in the up-down direction by the light guide member 45. The light emitting surface of the light guide member 45 is larger than the light emitting surface of the LED light sources 44. Thus, a wide range can be illuminated with a small number of light sources.

With the present preferred embodiment, the light guide member 45 is longer in the up-down direction than the lamp hole 42 and thus light can be diffused across a wide range from the upper end of the lamp hole 42 to the lower end of the lamp hole 42. The illumination range can thereby be widened in the up-down direction.

With the present preferred embodiment, a portion of the light guide member 45 is disposed outside the front cover 18 through the lamp hole 42. The outer portion 63o of the light guide member 45 that is disposed outside the front cover 18 emits the light of each LED light source 44 forward. The outer portion 63o is disposed outside the front cover 18 and thus the light emitted forward from the outer portion 63o is not blocked by the front cover 18. The illumination range can thus be widened in the up-down direction and the width direction Dw.

The width of the illumination range varies in accordance with the width W1 of the exposed portion 41. With the present preferred embodiment, the wide portion 41w of greatest width in front view is disposed higher than the narrow portion 41n of smallest width in front view. In this case, the width of the illumination range widens stepwise or continuously as the illumination range approaches the eyes of a person. The width of the illumination range is thus made wide at a position close to the eyes of a person in front of the straddled vehicle 1 and thus the ornamental impression of the position lamp 32 can be strengthened further.

With the present preferred embodiment, the entirety of the position lamp 32 is disposed not just at a height differing from that of the headlamp 30 but is also disposed at a height differing from that of the pair of front flashers 31. Thus, in comparison to a case where a portion of the position lamp 32 is disposed at the same height as another lamp, the ornamental impression of the position lamp 32 can be strengthened further.

With the present preferred embodiment, the front surface 18o of the front cover 18 and the outer surface 53o of the exposed portion 41 define the recess 54 of V-shaped cross section at the edge of the lamp hole 42. When there is no recess 54, it is difficult to make the light, passing through the outer surface 53o of the exposed portion 41, be refracted at a large angle in a vicinity of the edge of the lamp hole 42. On the other hand, if the recess 54 is provided, the light passing through the outer surface 53o of the exposed portion 41 can be refracted at a large angle in the vicinity of the edge of the lamp hole 42. The illumination range can thereby be widened.

With the present preferred embodiment, the recess 54 defined by the front surface 18o of the front cover 18 and the outer surface 53o of the exposed portion 41 surrounds the entire periphery of the exposed portion 41. Thus, the light passing through the outer surface 53o of the exposed portion 41 can be refracted outward in the width direction Dw at a large angle at the vicinity of the edge of the lamp hole 42. Further, the light passing through the outer surface 53o of the exposed portion 41 can be refracted in an up direction or a down direction at a large angle at the vicinity of the edge of the lamp hole 42. The illumination range can thereby be widened in both the width direction Dw and the up-down direction.

With the present preferred embodiment, the upper end (rear end 41r) of the exposed portion 41 of the position lamp 32 is positioned higher than the lower end 17b of the rear handle cover 17 and the exposed portion 41 of the position lamp 32 can thereby be made sufficiently long in the up direction. The illumination range can thereby be widened in the up direction.

With the present preferred embodiment, the lower end 41b of the exposed portion 41 of the position lamp 32 is positioned lower than the rider's seat surface 14a of the seat 14 and the exposed portion 41 of the position lamp 32 can thereby be made sufficiently long in the down direction. The illumination range can thereby be widened in the down direction.

With the present preferred embodiment, the exposed portion 41 of the position lamp 32 has the curved shape in side view and thus the area of the exposed portion 41 can be increased in comparison to a case where the exposed portion 41 has a rectilinear shape in side view. An area of the light emitting surface of the position lamp 32 from which the light of each LED light source 44 is emitted can thus be increased. The illumination range can thereby be widened.

With the present preferred embodiment, the width W1 of the exposed portion 41 of the position lamp 32 is narrowed so that the width W1 of the exposed portion 41 is narrower than the width W2 of the front wheel Wf of the straddled vehicle 1 and thus the position lamp 32 is distanced further from the front flashers 31 in the width direction Dw. The ornamental impression of the position lamp 32 can thereby be strengthened further.

With the present preferred embodiment, the width W1 of the exposed portion 41 of the position lamp 32 is narrowed so that the width W1 of the exposed portion 41 is narrower than the width of the head pipe 3 and thus the position lamp 32 is distanced further from the front flashers 31 in the width direction Dw. The ornamental impression of the position lamp 32 can thereby be strengthened further.

### Other Preferred Embodiments

Although preferred embodiments have been described above, but various modifications of the embodiments are possible.

For example, if the light of a single LED light source 44 spreads across a range from the upper end surface of the light guide rod 63 to the lower end surface of the light guide rod 63, one of the two LED light sources 44 may be omitted.

The light guide member 45 may be omitted from the LED lamp 100. In this case, a plurality of LED light sources 44 are aligned in the up-down direction behind the cover projection portion 53 as shown in FIG. 10. Each LED light source 44 can be disposed close to the clear cover 46 in comparison to an incandescent bulb in this case as well. The LED light sources 44 can thus be disposed comparatively close to the clear cover 46 and thus the light of the LED lamp 100 can be made to enter the exposed portion 41 while maintaining the intensity of the light.

The length L2 of the light guide rod 63 in the up-down direction may be equal to the length of the lamp hole 42 in the up-down direction or may be shorter than the length of the lamp hole 42 in the up-down direction.

The outer portion 63o disposed outside the front cover 18 through the lamp hole 42 may be omitted from the light guide member 45. That is, an entirety of the light guide member 45 may be disposed in an interior of the front cover 18.

The wide portion 41w of the exposed portion 41 may be disposed lower than the narrow portion 41n of the exposed portion 41. The width of the exposed portion 41 may vary stepwise. The width of the exposed portion 41 may be fixed from the upper end of the exposed portion 41 to the lower end of the exposed portion 41.

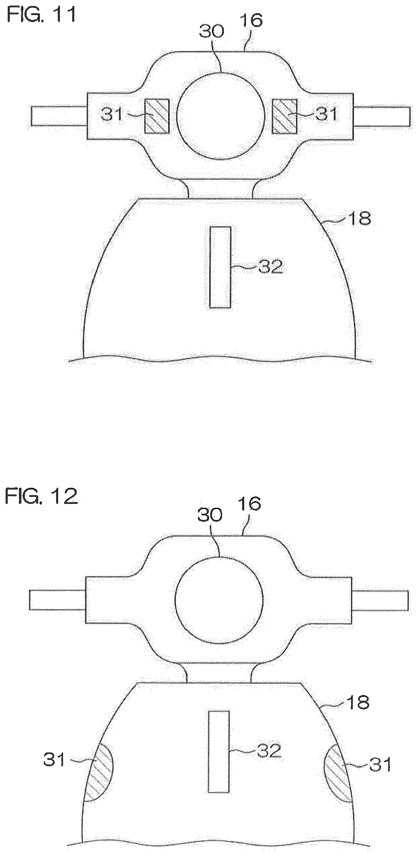

As shown in FIG. 11, the front flashers 31 may be disposed at the handle cover 16. Also as shown in FIG. 12, at least a portion of each front flasher 31 may be disposed at a height equal to that of the position lamp 32.

Two or more headlamps 30 may be disposed at the handle cover 16.

The recess 54 defined by the front surface 18o of the front cover 18 and the outer surface 53o of the exposed portion 41 does not have to be continuous across the entire periphery of the exposed portion 41.

The recess 54 may be omitted. That is, the front surface 18o of the front cover 18 and the outer surface 53o of the exposed portion 41 may be made smoothly continuous without defining a step at the edge of the lamp hole 42.

The upper end of the exposed portion 41 of the position lamp 32 may be disposed at the same height as the lower end 17b of the rear handle cover 17 or may be disposed lower than the lower end 17b of the rear handle cover 17.

The lower end 41b of the exposed portion 41 of the position lamp 32 may be disposed at the same height as the driver's seat surface 14a of the seat 14 or may be disposed higher than the driver's seat surface 14a of the seat 14.

The exposed portion 41 of the position lamp 32 may be rectilinear in side view.

The width W1 of the exposed portion 41 of the position lamp 32 may be equal to the width W2 of the front wheel Wf in front view or may be wider than the width W2 of the front wheel Wf in front view. The width W1 of the exposed portion 41 of the position lamp 32 may be equal to the width of the head pipe 3 in front view or may be wider than the width of the head pipe 3 in front view.

The straddled vehicle 1 is not limited to a scooter type motorcycle in which the power source 10 is swingable with respect to the frame 2, but may be an underbone type motorcycle in which the power source 10 is fixed to the frame 2. Also the straddled vehicle 1 is not limited to a motorcycle, but may be a vehicle including not less than 3 wheels, an all-terrain vehicle, or a snowmobile.

## Claims

1. A straddled vehicle (1) comprising:
a head pipe (3) disposed at a vehicle center (WO) in a width direction;
a steering apparatus (6) pivotably supported by the head pipe (3);
a front cover (18) disposed in front of the head pipe (3) ;
a headlamp (30) disposed at an upper portion of the steering apparatus (6);
a pair of front flashers (31) including a right front flasher (31) disposed at a right side of the vehicle center (WO) and a left front flasher (31) disposed at a left side of the vehicle center (WO); and
a position lamp (32) disposed at the front cover (18), positioned lower than the headlamp (30), including an LED lamp (100) that includes an LED light source (44), and including a clear cover (46) that transmits light of the LED lamp (100) forward; and
wherein the clear cover (46) includes an exposed portion (41) exposed from a lamp hole (42) that opens at a front surface (18o) of the front cover (18), **characterized in that** the exposed portion (41) is formed so that a length (L1) of the exposed portion (41) in an up-down direction is greater than a width (W1) of the exposed portion (41), extends in the up-down direction at the vehicle center (WO), and projects forward from the lamp hole (42), and **in that** the exposed portion (41) includes an inner surface (53i) provided with a plurality of projections (55) that extend in the up-down direction while projecting rearward and transmit the light of the LED lamp (100) forward.

2. A straddled vehicle (1) according to Claim 1, wherein the LED lamp (100) further includes a light guide member (45) that emits the light of the LED light source (44) forward while guiding the light of the LED light source (44) in the up-down direction, and
the clear cover (46) transmits forward the light of the LED light source (44) guided by the light guide member (45).

3. A straddled vehicle (1) according to Claim 2, wherein the light guide member (45) is longer in the up-down direction than the lamp hole (42).

4. A straddled vehicle (1) according to Claim 2 or 3, wherein the light guide member (45) includes an outer portion (63o) disposed outside the front cover (18) through the lamp hole (42) .

5. A straddled vehicle (1) according to any one of Claims 1 to 4, wherein
the exposed portion (41) of the position lamp (32) includes
a narrow portion (41n) that has the smallest width in the exposed portion (41) in a front view of the straddled vehicle (1); and
a wide portion (41w) that has the greatest width in the exposed portion (41) in the front view of the straddled vehicle (1) and that is disposed higher than the narrow portion (41n) .

6. A straddled vehicle (1) according to any one of Claims 1 to 5, wherein the entire position lamp (32) is disposed at a height differing from those of the headlamp (30) and the pair of front flashers (31).

7. A straddled vehicle (1) according to any one of Claims 1 to 6, wherein the front surface (18o) of the front cover (18) and an outer surface (53o) of the exposed portion (41) define a recess (54) of V-shaped cross section at an edge of the lamp hole (42).

8. A straddled vehicle (1) according to Claim 7, wherein the recess (54) surrounds an entire circumference of the exposed portion (41).

9. A straddled vehicle (1) according to any one of Claims 1 to 8, further comprising:
a first handle cover (16) disposed in front of a steering handle (7) of the steering apparatus (6); and
a second handle cover (17) disposed behind the steering handle (7) and connected to the first handle cover (16); and
wherein an upper end (41r) of the exposed portion (41) of the position lamp (32) is positioned higher than a lower end (17b) of the second handle cover (17).

10. A straddled vehicle (1) according to any one of Claims 1 to 9, further comprising: a seat (14) including a seating surface (14a) on which a rider sits; and
wherein a lower end (41b) of the exposed portion (41) of the position lamp (32) is positioned lower than the seating surface (14a) of the seat (14).

11. A straddled vehicle (1) according to any one of Claims 1 to 10, wherein the exposed portion (41) of the position lamp (32) has a curved shape in a side view of the straddled vehicle (1) .

12. A straddled vehicle (1) according to any one of Claims 1 to 11, wherein the width (W1) of the exposed portion (41) of the position lamp (32) is narrower than a width (W2) of a front wheel (Wf) of the straddled vehicle (1) in a front view of the straddled vehicle (1).

13. A straddled vehicle (1) according to any one of Claims 1 to 12, wherein the width (W1) of the exposed portion (41) of the position lamp (32) is narrower than a width (W3) of the head pipe (3) in a front view of the straddled vehicle (1).

14. A straddled vehicle (1) according to any one of Claims 1 to 13, wherein a distance (n1, m1, m2) between the LED lamp (100) and the clear cover (46) is smaller than the width (W1) of the exposed portion (41).

## Patentansprüche

1. Ein Grätsch-Fahrzeug (1), das folgende Merkmale aufweist:
ein Kopfrohr (3), das in einer Breitenrichtung an einer Fahrzeugmitte (WO) angeordnet ist;
eine Lenkvorrichtung (6), die durch das Kopfrohr (3) schwenkbar getragen wird;
eine Frontabdeckung (18), die vor dem Kopfrohr (3) angeordnet ist;
einen Scheinwerfer (30), der an einem oberen Abschnitt der Lenkvorrichtung (6) angeordnet ist;
ein Paar vorderer Blinker (31), mit einem rechten vorderen Blinker (31), der auf einer rechten Seite der Fahrzeugmitte (WO) angeordnet ist, und einem linken vorderen Blinker (31), der an einer linken Seite der Fahrzeugmitte (WO) angeordnet ist; und
eine Positionslampe (32), die an der Frontabdeckung (18) angeordnet ist, niedriger positioniert ist als der Scheinwerfer (30), eine LED-Lampe (100) aufweist, die eine LED-Lichtquelle (44) aufweist, und eine klare Abdeckung (46) aufweist, die Licht der LED-Lampe (100) nach vorne durchlässt; und
wobei die klare Abdeckung (46) einen freiliegenden Abschnitt (41) aufweist, der von einem Lampenloch (42) freigelegt ist, das sich an einer Frontoberfläche (18o) der Frontabdeckung (18) öffnet,
**dadurch gekennzeichnet, dass**:
der freiliegende Abschnitt (41) so gebildet ist, dass eine Länge (L1) des freiliegenden Abschnitts (41) in einer Richtung von oben nach unten größer ist als eine Breite (W1) des freiliegenden Abschnitts (41), sich in der Richtung von oben nach un-ten an der Fahrzeugmitte (WO) erstreckt und von dem Lampenloch (42) nach vorne vorsteht, und
dadurch, dass der freiliegende Abschnitt eine Innenoberfläche (53i) aufweist, die mit einer Mehrzahl von Vorsprüngen (55) versehen ist, die sich in der Richtung von oben nach unten erstrecken, während sie nach hinten vorstehen und das Licht der LED-Lampe (100) nach vorne durchlassen.

2. Ein Grätsch-Fahrzeug (1) gemäß Anspruch 1, bei dem die LED-Lampe (100) ferner ein Lichtführungsbauteil (45) aufweist, das das Licht der LED-Lichtquelle (44) nach vorne ausstrahlt, während es Licht der LED-Lichtquelle (44) in der Richtung von oben nach unten führt, und
die klare Abdeckung (46) das Licht der LED-Lichtquelle (44), das durch das Lichtführungsbauteil (45) geführt wird, nach vorne durchlässt.

3. Ein Grätsch-Fahrzeug (1) gemäß Anspruch 2, bei dem das Lichtführungsbauteil (45) in der Richtung von oben nach unten länger ist als das Lampenloch (42).

4. Ein Grätsch-Fahrzeug (1) gemäß Anspruch 2 oder 3, bei dem das Lichtführungsbauteil (45) einen äußeren Abschnitt (63o) aufweist, das durch das Lampenloch (42) außerhalb der Frontabdeckung (18) angeordnet ist.

5. Ein Grätsch-Fahrzeug (1) gemäß einem der Ansprüche 1 bis 4, bei dem:
der freiliegende Abschnitt (41) der Positionslampe (32) folgendes aufweist:
einen schmalen Abschnitt (41n), der in einer Vorderansicht des Grätsch-Fahrzeugs (1) die kleinste Breite in dem freiliegenden Abschnitt (41) aufweist; und
einen breiten Abschnitt (41w), der in der Vorderansicht des Grätsch-Fahrzeugs (1) die größte Breite in dem freiliegenden Abschnitt (41) aufweist und der höher angeordnet ist als der schmale Abschnitt (41n).

6. Ein Grätsch-Fahrzeug (1) gemäß einem der Ansprüche 1 bis 5, bei dem die gesamte Positionslampe (32) an einer Höhe angeordnet ist, die sich von denjenigen des Scheinwerfers (30) und des Paars vorderer Blinker (31) unterscheidet.

7. Ein Grätsch-Fahrzeug (1) gemäß einem der Ansprüche 1 bis 6, bei dem die Vorderoberfläche (18o) der Frontabdeckung (18) und eine Außenoberfläche (53o) des freiliegenden Abschnitts (41) eine Ausnehmung (54) mit V-förmigem Querschnitt an einem Rand des Lampenlochs (42) definieren.

8. Ein Grätsch-Fahrzeug (1) gemäß Anspruch 7, bei dem die Ausnehmung (54) einen gesamten Umfang des freiliegenden Abschnitts (41) umgibt.

9. Ein Grätsch-Fahrzeug (1) gemäß einem der Ansprüche 1 bis 8, das ferner folgende Merkmale aufweist:
eine erste Griffabdeckung (16), die vor einem Lenkgriff (7) der Lenkvorrichtung (6) angeordnet ist; und
eine zweite Griffabdeckung (17), die hinter dem Lenkgriff (7) angeordnet und mit der ersten Griffabdeckung (16) verbunden ist; und
wobei ein oberes Ende (41r) des freiliegenden Abschnitts (41) der Positionslampe (32) höher positioniert ist als ein unteres Ende (17b) der zweiten Griffabdeckung (17).

10. Ein Grätsch-Fahrzeug (1) gemäß einem der Ansprüche 1 bis 9, das ferner Folgendes aufweist: einen Sitz (14) mit einer Sitzoberfläche (14a), auf der ein Fahrer sitzt; und
wobei ein unteres Ende (41b) des freiliegenden Abschnitts (41) der Positionslampe (32) niedriger positioniert ist als die Sitzoberfläche (14a) des Sitzes (14).

11. Ein Grätsch-Fahrzeug (1) gemäß einem der Ansprüche 1 bis 10, bei dem der freiliegende Abschnitt (41) der Positionslampe (32) in einer Seitenansicht des Grätsch-Fahrzeugs (1) eine gekrümmte Form aufweist.

12. Ein Grätsch-Fahrzeug (1) gemäß einem der Ansprüche 1 bis 11, bei dem die Breite (W1) des freiliegenden Abschnitts (41) der Positionslampe (32) in einer Vorderansicht des Grätsch-Fahrzeugs (1) schmaler ist als eine Breite (W2) eines Vorderrads (Wf) des Grätsch-Fahrzeugs (1).

13. Ein Grätsch-Fahrzeug (1) gemäß einem der Ansprüche 1 bis 12, bei dem die Breite (W1) des freiliegenden Abschnitts (41) der Positionslampe (32) in einer Vorderansicht des Grätsch-Fahrzeugs (1) schmaler ist als eine Breite (W3) des Kopfrohrs (3).

14. Ein Grätsch-Fahrzeug (1) gemäß einem der Ansprüche 1 bis 13, bei dem eine Entfernung (n1, m1, m2) zwischen der LED-Lampe (100) und der klaren Abdeckung (46) kleiner ist als die Breite (W1) des freiliegenden Abschnitts (41).

## Revendications

1. Véhicule à selle (1), comprenant:
un tuyau de tête (3) disposé au centre de véhicule (WO) dans la direction de la largeur;
un appareil de direction (6) supporté de manière pivotante par le tuyau de tête (3);
un couvercle avant (18) disposé devant le tuyau de tête (3);
un phare (30) disposé sur une partie supérieure de l'appareil de direction (6);
une paire de clignotants avant (31) comportant un clignotant avant droit (31) disposé d'un côté droit du centre de véhicule (WO) et un clignotant avant gauche (31) disposé d'un côté gauche du centre de véhicule (WO); et
une lampe de position (32) disposée sur le couvercle avant (18), positionnée plus bas que le projecteur (30), comportant une lampe à DEL (100) qui comporte une source de lumière à DEL (44), et comportant un couvercle clair (46) qui transmet la lumière de la lampe à DEL (100) vers l'avant; et
dans lequel le couvercle clair (46) comporte une partie exposée (41) exposée à partir d'un trou à lampe (42) qui s'ouvre sur une surface avant (18o) du couvercle avant (18),
**caractérisé par le fait que**
la partie exposée (41) est formée de sorte qu'une longueur (L1) de la partie exposée (41) dans une direction du haut vers le bas soit supérieure à une largeur (W1) de la partie exposée (41), s'étende dans la direction du haut vers le bas au centre de véhicule (WO), et ressorte vers l'avant depuis le trou à lampe (42), et
que la partie exposée (41) comporte une surface intérieure (53i) munie d'une pluralité de saillies (55) qui s'étendent dans la direction du haut vers le bas tout en faisant saillie vers l'arrière et transmettent la lumière de la lampe à DEL (100) vers l'avant.

2. Véhicule à selle (1) selon la revendication 1, dans lequel la lampe à DEL (100) comporte par ailleurs un élément guide-lumière (45) qui émet la lumière de la source de lumière à DEL (44) vers l'avant tout en guidant la lumière de la source de lumière à DEL (44) dans la direction du haut vers le bas, et
le couvercle clair (46) transmet la lumière de la source de lumière à DEL (44) guidée par l'élément guide-lumière (45).

3. Véhicule à selle (1) selon la revendication 2, dans lequel l'élément guide-lumière (45) est plus long dans la direction du haut vers le bas que le trou à lampe (42).

4. Véhicule à selle (1) selon la revendication 2 ou 3, dans lequel l'élément guide-lumière (45) comporte une partie extérieure (63o) disposée à l'extérieur du couvercle avant (18) à travers le trou à lampe (42).

5. Véhicule à selle (1) selon l'une quelconque des revendications 1 à 4, dans lequel
la partie exposée (41) de la lampe de position (32) comporte
une partie étroite (41n) qui présente la largeur la plus petite dans la partie exposée (41) dans une vue de face du véhicule à selle (1); et
une partie large (41w) qui présente la largeur la plus grande dans la partie exposée (41) dans la vue de face du véhicule à selle (1) et qui est disposée plus haut que la partie étroite (41n).

6. Véhicule à selle (1) selon l'une quelconque des revendications 1 à 5, dans lequel toute la lampe de position (32) est disposée à une hauteur différente de celles du projecteur (30) et de la paire de clignotants avant (31).

7. Véhicule à selle (1) selon l'une quelconque des revendications 1 à 6, dans lequel la surface avant (18o) du couvercle avant (18) et une surface extérieure (53o) de la partie exposée (41) définissent un évidement (54) de section en "V" sur un bord du trou à lampe (42).

8. Véhicule à selle (1) selon la revendication 7, dans lequel l'évidement (54) entoure toute la circonférence de la partie exposée (41).

9. Véhicule à selle (1) selon l'une quelconque des revendications 1 à 8, comprenant par ailleurs:
un premier couvercle de poignée (16) disposé devant une poignée de direction (7) de l'appareil de direction (6); et
un deuxième couvercle de poignée (17) disposé derrière la poignée de direction (7) et connecté au premier couvercle de poignée (16); et
dans lequel une extrémité supérieure (41r) de la partie exposée (41) de la lampe de position (32) est positionnée plus haut qu'une extrémité inférieure (17b) du deuxième couvercle de poignée (17).

10. Véhicule à selle (1) selon l'une quelconque des revendications 1 à 9, comprenant par ailleurs: un siège (14) comportant une surface assise (14a) sur laquelle s'assied un conducteur; et
dans lequel une extrémité inférieure (41b) de la partie exposée (41) de la lampe de position (32) est positionnée plus bas que la surface assise (14a) du siège (14).

11. Véhicule à selle (1) selon l'une quelconque des revendications 1 à 10, dans lequel la partie exposée (41) de la lampe de position (32) présente une forme courbe dans une vue de côté du véhicule à selle (1).

12. Véhicule à selle (1) selon l'une quelconque des revendications 1 à 11, dans lequel la largeur (W1) de la partie exposée (41) de la lampe de position (32) est plus étroite qu'une largeur (W2) d'une roue avant (Wf) du véhicule à selle (1) dans une vue de face du véhicule à selle (1).

13. Véhicule à selle (1) selon l'une quelconque des revendications 1 à 12, dans lequel la largeur (W1) de la partie exposée (41) de la lampe de position (32) est plus étroite qu'une largeur (W3) du tuyau de tête (3) dans une vue de face du véhicule à selle (1).

14. Véhicule à selle (1) selon l'une quelconque des revendications 1 à 13, dans lequel une distance (n1, m1, m2) entre la lampe à DEL (100) et le couvercle clair (46) est inférieure à la largeur (W1) de la partie exposée (41).
